(19) Europäisches Patentamt
European Patent Office
Office européen des brevets

(11) **EP 1 936 828 B1**

(12) **EUROPEAN PATENT SPECIFICATION**

(45) Date of publication and mention
of the grant of the patent:
**16.04.2014 Bulletin 2014/16**

(51) Int Cl.:
***H04W 52/24*** *(2009.01)*     ***H04W 52/28*** *(2009.01)*
***H04L 1/00*** *(2006.01)*

(21) Application number: **08006600.4**

(22) Date of filing: **20.07.2006**

(54) **Multiplexing and feedback support for wireless communication systems**

Unterstützung für Multiplexing und Rückmeldung für ein drahtloses Kommunikationssysteme

Support de multiplexage et de réponse pour systèmes de communication sans fil

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **21.07.2005 US 701967 P
10.01.2006 US 758075 P
19.07.2006 US 489918**

(43) Date of publication of application:
**25.06.2008 Bulletin 2008/26**

(62) Document number(s) of the earlier application(s) in
accordance with Art. 76 EPC:
**06788091.4 / 1 911 169**

(73) Proprietor: **Qualcomm Incorporated
San Diego, CA 92121-1714 (US)**

(72) Inventors:
• **Damnjanovic, Aleksander
San Diego
California 92121-1714 (US)**
• **Casaccia, Lorenzo
San Diego
California 92121-1714 (US)**
• **Andersen, Niels Peter Skov
San Diego
California 92121-1714 (US)**

(74) Representative: **Dunlop, Hugh Christopher et al
R.G.C. Jenkins & Co.
26 Caxton Street
London SW1H 0RJ (GB)**

(56) References cited:
**US-A1- 2004 160 984    US-A1- 2004 166 869**

• **BALL C F ET AL: "Improving GPRS/EDGE end-to-end performance by optimization of the RLC protocol and parameters", VEHICULAR TECHNOLOGY CONFERENCE, 2004. VTC2004-FALL. 2004 IEEE 60TH LOS ANGELES, CA, USA 26-29 SEPT. 2004, PISCATAWAY, NJ, USA,IEEE, 26 September 2004 (2004-09-26), pages 4521-4527, XP010790250, ISBN: 0-7803-8521-7**
• **JENKAC H ET AL: "Retransmission strategies for MBMS over GERAN", WIRELESS COMMUNICATIONS AND NETWORKING CONFERENCE, 2005 IEEE NEW ORLEANS, LA, USA 13-17 MARCH 2005, PISCATAWAY, NJ, USA, IEEE, 13 March 2005 (2005-03-13), pages 1773-1779, XP010791443, ISBN: 0-7803-8966-2**
• **WALKE B.H.: "MOBILE RADIO NETWORKS: NETWORKING, PROTOCOLS AND TRAFFIC PERFORMANCE", 2002, JOHN WILEY & SONS, CHICHESTER, XP002412575, * page 136 - page 143 * * page 326 - page 329 ***

## Description

The present Application for Patent claims priority to (1) Provisional Application Serial Number 60/701,967, entitled Method and Apparatus for Multiplexing in Wireless Communications, filed on July 21, 2005; and (2) Provisional Application Serial Number 60/758,075, entitled Some Elements for the Support of VoIP in GERAN, filed on January 10, 2006. These provisional applications are assigned to the assignee of the present Application.

## BACKGROUND

### Field

Embodiments of the present invention relates generally to telecommunications, and, more specifically, to methods, apparatus, and articles of manufacture for multiplexing multiple users and supporting feedback in cellular radio networks.

### Background

A modem communication system is expected to provide reliable data transmission for a variety of applications, including voice and data applications. Multi-user communications may include a transmitter sending data to multiple receivers, and several transmitters sending data to a receiver. Cellular communication systems employ multi-user communications, for example, between a base transceiver station (BTS) and multiple mobile stations (MSs) within the sector served by the BTS. Known multi-user communication systems are based on frequency division multiple access (FDMA), time division multiple access (TDMA), code division multiple access (CDMA), and perhaps other multiple access communication schemes.

A CDMA system may be designed to support one or more CDMA standards, such as (1) the "TIA/EIA-95 Mobile Station-Base Station Compatibility Standard for Dual-Mode Wideband Spread Spectrum Cellular System," (2) the "TIA/EIA-98-C Recommended Minimum Standard for Dual-Mode Wideband Spread Spectrum Cellular Mobile Station," (3) the standard sponsored by a consortium named "3rd Generation Partnership Project" (3GPP) and embodied in a set of documents including documents known as 3G TS 25.211, 3G TS 25.212, 3G TS 25.213, and 3G TS 25.214 (the "W-CDMA standard"), (4) the standard sponsored by a consortium named "3rd Generation Partnership Project 2" (3GPP2) and embodied in a set of documents including "C.S0002-A Physical Layer Standard for cdma2000 Spread Spectrum Systems," the "C.S0005-A Upper Layer (Layer 3) Signaling Standard for cdma2000 Spread Spectrum Systems," (5) the 1xEV-DO standard "TIA/EIA/IS-856 cdma2000 High Rate Packet Data Air Interface Specification," as well as other standards.

A TDMA system may implement the standards known as Global System for Mobile Communications (GSM). GSM-based networks are widely deployed throughout the world. General Packet Radio Service (GPRS) and its enhanced version known as Enhanced Data rates for GSM Evolution (EDGE) are data services available at some GSM-compatible mobile stations (*e.g.*, cellular telephones). GSM, GPRS, and EDGE may also be collectively referred to as GSM EDGE Radio Access Network or GERAN.

GERAN air interfaces may use frequency hopping. Frequency hopping is a technique that provides frequency diversity over time. A frequency hopping system transmits on a different carrier frequency during every transmission time unit or slot, which typically has a duration of twenty milliseconds. Consecutive hops from one carrier frequency to another are generally made between non-contiguous carrier frequencies to reduce frequency-selective fading of consecutive frames, *i.e.*, to reduce the probability that blocks in consecutive frames will not be correctly decoded at a receiver.

The demand for wireless services continues to increase, while the radio spectrum is either fixed for given wireless applications or available at high cost. Therefore, increased ability to provide services within a fixed spectral allocation is a desirable attribute of wireless systems, including GSM-based cellular systems.

Internet protocol (IP) is used to transport data packets (datagrams) across many networks, most notably the Internet. Voice may be encapsulated in IP packets and transported as data over such networks. In fact, voice over IP (VoIP), also known as Internet telephony or IP telephony, is a fast-growing application of IP-based networks. A call connecting a mobile station to another telephone terminal may be routed using VoIP along at least some portion of the route between the mobile station and the other terminal. Such a call may be converted between VoIP and another protocol at the air interface of the cellular network serving the mobile station. It may be preferable, however, to have end-to-end IP-based connectivity, assuming this is feasible under existing system constraints.

One problem with transmitting IP datagrams over a GERAN air interface is the latency of feedback information inherent in the GSM standards. Typically, a GERAN system will transmit twelve blocks of twenty millisecond duration each, and then send a polling request to the receiver (*e.g.*, to a mobile station or a BTS), asking the receiver to inform the transmitter about the status of the sent blocks. Thus, an acknowledgement of the first block in a twelve-block series of blocks will be received about 240 milliseconds later, or with even greater latency. End-to-end acknowledgements of a VoIP call, might take sill longer because of additional en route delays. This is typically too much latency for live telephone conversations. Furthermore, link quality in a mobile environment may deteriorate rapidly, and a delay of 240 milliseconds may be too long for providing timely link quality indications. Still further, additional aspects of cellular system operation may benefit from decreased latency of feedback mechanisms.

There is therefore a need in the art for methods and apparatus that increase spectral efficiency of wireless systems. There is also a need in the art for shortening feedback latency in GERAN-based and similar wireless systems. Moreover, extensive modifications of deployed equipment may be expensive, and compatibility with existing customer equipment may be desirable from a marketing perspective. Therefore, there is a need in the art to address the above-mentioned deficiencies while preserving compatibility with currently-existing GERAN mobile stations and avoiding extensive changes to cellular network hardware serving such stations.

BALL C F ETAL: VEHICULAR TECHNOLOGY CONFERENCE, 2004, VTC2004-FALL. 2004 IEEE 60TH LOS ANAGELES, CA, USA 26-29 SEPT. 2004, PISCATAWAY, NJ, USA, IEEE, 26 September 2004 (2004-09-26), pages 4521-4527, ISBN: 0-7803-8521-7; describes "Improving GPRS/ EDGE end-to-end performance by optimization of the RLC protocol and parameters.

## SUMMARY

Embodiments disclosed herein address the above stated needs by multiplexing multiple downlink packets/blocks intended for multiple mobile stations into the same time slot and the same carrier frequency, and by providing a fast feedback mechanism for GERAN air interfaces.

According to the invention there is provided the method of claim 1.

According to the invention there is also provided the mobile station of claim 16.

According to the invention there is also provided the machine readable medium of claim 18.

According to the invention there is also provided the base transceiver station of claim 19.

According to the invention there is also provided the machine readable medium of claim 20.

These and other aspects of the present invention will be better understood with reference to the following description, drawings, and appended claims.

## BRIEF DESCRIPTION OF THE DRAWINGS

Figure 1 is a high-level block diagram showing selected components of a cellular radio network configured in accordance with aspects of an embodiment of the present invention;
Figure 2 illustrates a transmission time interval used in the network of Figure 1;
Figure 3 illustrates selected fields of a downlink header with control information.

Figure 4 illustrates selected fields of an uplink header with control information; and
Figure 5 illustrates a fast feedback scheme for an air interface.

## DETAILED DESCRIPTION

In this document, the words "embodiments," "variant," and similar expressions are used to refer to particular apparatus, process, or article of manufacture, and not necessarily to the same apparatus, process, or article of manufacture. Thus, "one embodiment" (or a similar expression) used in one place or context can refer to a particular apparatus, process, or article of manufacture; the same or a similar expression in a different place can refer to a different apparatus, process, or article of manufacture. The expression "alternative embodiment," "alternative variant," and similar phrases are used to indicate one of a number of different possible embodiments or variants. The number of possible embodiments or variants is not necessarily limited to two or any other quantity.

The word "exemplary" is used herein to mean "serving as an example, instance, or illustration." Any embodiment described herein as "exemplary" is not necessarily to be construed as preferred or advantageous over other embodiments. All of the embodiments described in this description are exemplary embodiments provided to enable persons skilled in the art to make or use the invention, and not to limit the scope of legal protection afforded the invention, which is defined by the claims and their equivalents.

Base transceiver stations (BTSs) and base station controllers (BSCs) are parts of a network called "radio network," "RN," "access network," or "AN." A base station controller may also be referred to as a radio network controller or "RNC." A radio network may be a GERAN-based network. The radio network may transport data packets between multiple mobile stations (MSs), also known as user equipment devices. The radio network may be further connected to additional networks outside the radio network, such as a corporate intranet, the Internet, another radio network, or a conventional public switched telephone network (PSTN), and may transport data and voice between each mobile station and such outside networks.

Described examples may use superposition coding, multi-user packet transmission, and joint detection and decoding communication techniques. The following paragraphs explain these techniques.

Superposition coding refers to the use of the same transmission resource to communicate with multiple receivers. In this context, the use of the same transmission resource refers to simultaneous transmission of data from a transmitter to the multiple receivers using the same frequency and time slot. By way of illustration, consider a radio transmitter Tx communicating (1) with a first receiver $R_{x1}$ over a first physical communication link $L_1$,

and (2) with a receiver $R_{x2}$ over a second communication link $I_2$. Assume that the radio conditions are weak for the first receiver/link and strong for the second receiver/link. (This situation may be temporary, as radio conditions change constantly, especially for mobile stations.) In other words, for a fixed transmitted radio power the signal to interference and noise ratio (SINR) and a carrier-to-interference

(C/I) ratio for the first receiver are lower (or much lower) than the corresponding SINR and C/I ratio for the second transmitter. The transmitter Tx with knowledge of the relative radio conditions for the two receivers can apportion its power budget for a particular slot and a particular carrier frequency between the two receivers so that a first block of data intended for the first receiver $R_{x1}$ (the one in the weaker radio conditions) is transmitted with higher power than a second block of data intended for the second receiver $R_{x2}$ (the one in the stronger radio conditions). For example, the transmitter Tx may dedicate sufficient power to the block intended for the first receiver $R_{x1}$ to allow the first receiver $R_{x1}$ to decode this block given the current radio conditions and the additional interference due to transmission of the second block to the second receiver $R_{x2}$. The transmitter Tx may then dedicate less power to the block intended for the second receiver $R_{x2}$, but still sufficient for the second receiver $R_{x2}$ to decode the second block using, for example, interference cancellation to eliminate or reduce the interference caused by the transmission of the first block.

The transmitter then transmits the two blocks on the same carrier frequency and at the same time. Thus, it can be said that the two blocks "collide."

Because the first block of data is transmitted with higher power allocation than the second block, the second block simply appears to the first receiver $R_{x1}$ as an increase in noise or interference. If the power offset between the transmissions of the two blocks is high enough, the degradation of the SINR at the first receiver $R_{x1}$ may be small and even inconsequential. (This need not always be the case.) Thus, the first receiver $R_{x1}$ should be able to decode the first block if it is transmitted with sufficient power relative to the transmission rate of the first block, the current radio conditions, and the additional interference caused by the transmission of the second block.

The second receiver $R_{x2}$ should also be able to decode the first block, because it receives it with a better SINR than the first receiver $R_{x1}$ due to the stronger radio conditions of the second receiver $R_{x2}$. Once the second receiver $R_{x2}$ decodes the first block, it can treat is as interference and cancel it from the total signal received during the period of time when the two blocks were received, using known interference cancellation techniques. The remaining signal represents the second block in combination with noise and interference originating from other sources. The second receiver $R_{x2}$ should be able to decode the second block if the second block is transmitted with sufficient power relative to the transmission rate of the second block and the radio conditions of the second receiver $R_{x2}$, albeit with lower power than the first block.

Note that this method may be extended to three or more receivers. For example, most power could be allocated for transmissions to the receiver in the weakest radio conditions, least power could be allocated to transmissions to the receiver in the strongest radio conditions, and intermediate power could be allocated to the receiver in intermediate radio conditions. The receiver in the strongest radio conditions could then decode the block intended for the receiver in the weakest radio conditions, cancel the decoded block from the received signal, decode the block intended for the receiver in intermediate radio conditions, cancel the second decoded block, and finally decode the block intended for itself. (Such decoding/cancellation process may be referred to as successive interference cancellation.) The receiver in intermediate radio conditions could also decode the block intended for the receiver in the weakest radio conditions, cancel it from the received signal, and then decode the block intended for itself. The receiver in the weakest radio conditions may be able to directly decode the block intended for it, because that block is transmitted at the highest power level. After perusal of this document, a person skilled in the art should be able to extend successive interference cancellation techniques to four or more receivers without excessive experimentation or further invention.

Analogous processes may be performed at a single receiver when multiple transmitters simultaneously transmit to the single receiver on the same frequency. In other words, multi-user joint detection using techniques such as successive interference cancellation may be employed to decode multiple packets originating from multiple transmitters and that collide (i.e., are received simultaneously) at the receiver. The receiver may be a base transceiver station, and the multiple transmitters may be mobile stations.

Note that techniques other than interference cancellation may be used in implementing superposition coding.

Multi-user packet transmission may also be used to multiplex two or more users into a single slot (i.e., into the same frequency-time allocation). For example, a transmitter may form a packet with different payload data intended for two or more different receivers. Each of the two or more receivers may decode the entire packet, and determine which part of the packet is intended for it from the packet's header or from another form of signaling. Multi-user packet communications enhance spectrum utilization through statistical multiplexing, particularly for live voice communications that typically include considerable percentage of silence periods. For example, if two users (e.g., mobile stations) share a slot and voice activity is 50 percent of the time for each of the two users, only a single user actually occupies the slot half of the time, 25 percent of the time neither user occupies the slot, and both users need to occupy the slot during the remaining 25 percent of the time. During the remaining 25 percent of the time, base station may utilize multi-user packet transmission or superposition coding techniques. Hard capacity of GERAN may thus be doubled for groups of two mobile stations sharing a slot. If three mobile stations share a slot, hard limit on capacity may be tripled.

The gains realizable from statistical multiplexing typically exceed any losses from the additional overhead that may be required to send the same packet to multiple receivers.

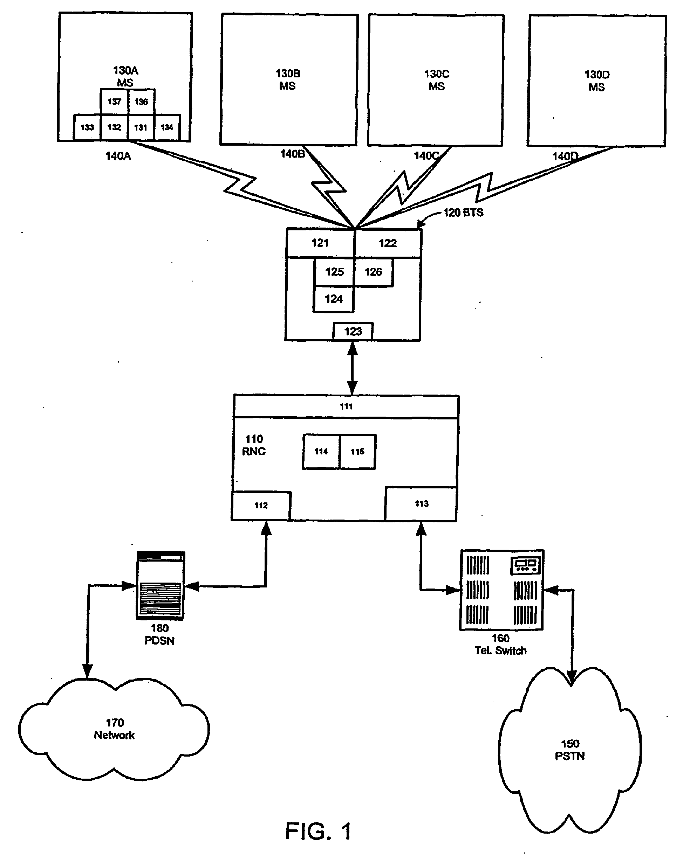

Figure 1 illustrates selected components of a GERAN-based (*e.g.*, GSM compliant) communication network 100, which includes a radio network controller 110 coupled to a wireless base transceiver station 120. The base transceiver station 120 communicates with mobile stations 130A, 130B, 130C, and 130D through corresponding wireless communication links 140A through 140D, as shown. The radio network controller 110 is coupled to a public switched telephone network 150 through a telephone switch 160, and to a packet switched network 170 through a packet data server node (PDSN) 180. Data interchange, between various network elements, such as the radio network controller 110 and the packet data server node 180, can be implemented using any number of protocols, for example, the Internet Protocol, an asynchronous transfer mode (ATM) protocol, T1, E1, frame relay, and other protocols.

In the illustrated example, the communication network 100 provides to the mobile stations 130 data communication services, cellular telephone services, and telephone services through VoIP. In alternative examples, the communication network 100 may provide to the mobile stations 130 only data services (such as VoIP) or only cellular telephone services.

The mobile stations 130 may include wireless telephones, wireless modems, personal digital assistants, wireless local loop apparatus, PC cards, external or internal modems, and other communication devices. A typical mobile station, for example, the user equipment device 130A, may include receiver circuitry 131, transmitter circuitry 132, an encoder 133, a decoder 134, a processor 136, and a memory device 137. The receiver circuitry 131, transmitter circuitry 132, encoder 133, and decoder 134 are configured by the processor 136 executing code stored in the memory device 137. Each mobile station 130 is configured to communicate data and voice with the BTS 120 using a GERAN (GSM) protocol. Each communication channel 140 may include both a forward link and a reverse link between the BTS 120 and a corresponding user equipment device 130.

The base transceiver station 120 includes one or more wireless receivers (*e.g.*, a receiver 121), one or more wireless transmitters (*e.g.*, a transmitter 122), one or more radio network controller interfaces (*e.g.*, an interface 123), one or more memory devices (*e.g.*, a memory device 124), one or more processors (*e.g.*, a processor 125), and encoder/decoder circuitry (*e.g.*, encoder/decoder circuitry 126). The receiver 121 and transmitter 122 of the base transceiver station 120 are configured by the processor 125 operating under control of the program code stored in the memory device 124 to establish forward and reverse links with the user equipment devices 130 in order to send data and voice packets to and receive data and voice packets from the user equipment devices 130. In the case of data services (including VoIP), for example, the base transceiver station 120 may receive forward link data packets from the packet switched network 170 through the packet data server node 180 and through the radio network controller 110, and transmit these packets to the user equipment devices 130. The base transceiver station 120 may receive reverse link data packets that originate at the user equipment devices 130, and forward these packets to the packet switched network 170 through the radio network controller 110 and the packet data server node 180. In the case of telephone services, the base transceiver station 120 may receive forward link data packets from the telephone network 150 through the telephone switch 160 and through the radio network controller 110, and transmit these packets to the user equipment devices 130. Voice carrying packets originating at the user equipment devices 130 may be received at the base transceiver station 120 and forwarded to the telephone network 150 via the radio network controller 110 and the telephone switch 160.

In variants of the example shown in Figure 1, the mobile stations 130 and the BTS 120 are configured to communicate with each other using superposition coding, multi-user packets, joint decoding, and/or joint detection. In one variant, for example, the mobile stations 130A and 130B are configured to communicate with the BTS 120 selectively using superposition coding, multi-user packets, and joint decoding and detection; the mobile stations 130C and 130D, on the other hand, are legacy devices that communicate with the BTS 120 using conventional GSM protocols.

In one variant, the BTS 120, under control of its processor 125 executing the program code stored in the memory device 124, configures itself and the mobile stations 130A and 130B for downlink communications using the same transmission resource and superposition coding. (Downlink communications are communications from the radio network to the mobile stations.) In other words, the BTS 120 sends data packets to the mobile stations 130A and 130B on the same carrier frequency and during the same time period (slot) at least some of the time.

In another variant, the BTS 120, under control of its processor 125 executing the program code stored in the memory device 124, configures itself and the mobile stations 130A and 130B for downlink communications using multi-user packets and statistical multiplexing. In other words, the BTS 120 sends the same packet to the mobile stations 130A and 130B, with different portions of the packet containing payload data intended for the different mobile stations. Each of the mobile stations 130A or 130B decodes the entire packet, but uses only the payload data intended for it, ignoring the payload data intended for the other mobile station 130.

In yet another variant, the BTS 120, under control of its processor 125 executing the program code stored in the memory device 124, selectively configures itself and the mobile stations 130A and 130B for downlink communications using multi-user packets or superposition coding. The BTS 120 may configure itself and the mobile stations 130A/B for downlink communications using superposition coding when the two mobile stations have sufficiently disparate radio conditions. Spectral efficiency gains are best realized through superposition coding when the radio conditions are disparate at the multiple receivers. Thus, the BTS may configure itself and the mobile stations 130A/B for superposition coding on the downlink when the C/I ratios for the two (or more) mobile stations differ by at least a predetermined extent. For example, the BTS 130 may match (*i.e.*, group) two or more mobile stations when their respective C/I ratios differ by at least 10 dB, by at least 6 dB, or by at least 3 dB. Otherwise, *i.e.*, if the C/I ratios for the two or more grouped mobile stations differ by less than a predetermined extent such as 10 dB, 6 dB, or 3 dB, the BTS 120 may configure itself and the mobile stations for downlink communications with multi-user packets, realizing statistical multiplexing gains. As another example, the BTS 120 may employ multi-user packet downlink communications when there is no payload data for at least one of the mobile stations multiplexed in a given slot, and employ superposition coding when payload data need be simultaneously transmitted to all the mobile stations multiplexed in the given slot.

The radio network (*e.g.*, the BTS 120) may terminate a transmission early for all mobile stations grouped together if acknowledgements from all these mobile stations are received for a given packet before the maximum number of repetitions of the packet have been transmitted. Termination of transmission upon receipt of acknowledgement from fewer than all mobile stations addressed in the same slot may therefore be prevented.

Note that the BTS 120 may configure one or more MS pairs (or higher-order sets) for downlink communications using superposition coding, one or more MS pairs (or higher-order sets) for downlink communications using multi-user packets, and/or one or more MSs for downlink communications using conventional GSM-based (non-multiplexed) methods. Note also that a mobile station that is capable of downlink communications using superposition coding and/or multi-user packets need not use these techniques at all times. For example, such a mobile station may be configured for downlink communications using conventional GSM-based methods when it cannot be matched with another such mobile station, or when there is no need for the additional gains that can flow from multiplexing a plurality of mobile stations into a single slot.

Turning now to uplink communications (from the mobile stations to the radio network), the BTS 120 may simultaneously receive colliding data packets on the uplink from the mobile stations 130A and 130B on the same carrier frequency. (The uplink carrier frequency for the mobile stations 130A and 130B may be the same, but differ from the downlink carrier frequency for these mobile stations.) Thus, the same two or more mobile stations that are paired for downlink communications using superposition coding and/or multi-user packets may also share the same uplink slot. Concurrently, the BTS 120 may conduct uplink communications with legacy mobile stations (*e.g.*, the mobile stations 130C and 130D) using conventional non-multiplexed GSM-based methods.

Thus, the spectral efficiency of the system 100 is increased by means of multiplexing the mobile stations 130A and 130B into a single slot, and the interference between these two units sharing the same slot is addressed through advanced encoding and decoding techniques, such as superposition coding, multi-user packets, and joint detection and decoding, as described above. In some variants, robustness and link efficiency are improved through use of hybrid Automatic Repeat-reQuest (H-ARQ) techniques, for example, type II H-ARQ. In some variants, only two transmission time interval (TTI) transmissions are used (single retransmission); in other variants, three TTI transmissions are used (two retransmissions). The use of H-ARQ techniques may thus increase delays, for example, the maximum effective TTI may be increased from 20 milliseconds to 40 or 60 milliseconds.

In addition to increased capacity, the system 100 reduces the changes to the physical layer structure of GSM-based communications. Certain changes are implemented in order to accommodate control channels that facilitate H-ARQ type II operation, multi-user packets, superposition coding, and joint detection and decoding, but the system 100 is deployed in backward compatible manner. In this way, the BTS 120 supports-legacy mobile stations 130C and 130D using the same carrier frequency sets as the mobile stations 130A and 130B, which are capable of multiplexed operation described above.

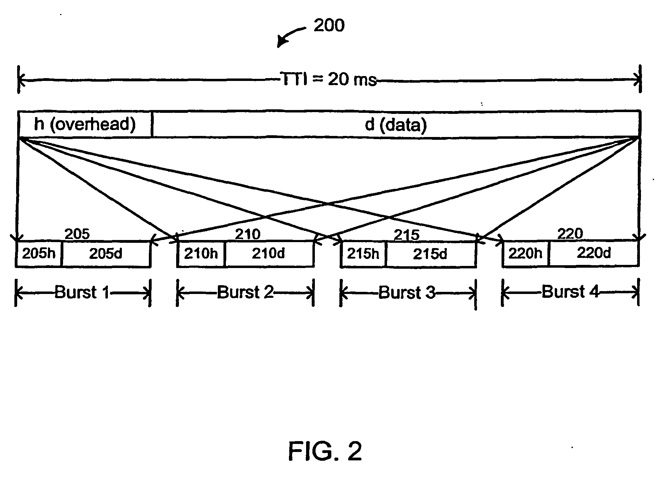

A header may be included in each packet transmission in order to accommodate link adaptation algorithm. The information in the header may be repeated every TTI. Figure 2 illustrates an exemplary TTI 200 with four bursts of packets 205, 210, 215, and 220. Each packet (205, 210, 215, and 220) includes an overhead portion (headers 205h, 210h, 215h, and 220h) and a data portion (data 205d, 210d, 215d, and 220d). Note that Figure 2 and all other Figures are not drawn to scale; thus, the relative time durations of the header and data portions of each of the packets in Figure 2 are merely exemplary.

Uplink and downlink control information is used to configure the BTS 120 and the mobile stations 130 for exchanging data packets as described above. On the downlink, a packet header may contain both uplink and downlink control information. The uplink control information transmitted in the header of a downlink packet may include three bits uplink H-ARQ ACK/NAK (one ACK/NAK bit for each of three mobile stations that can be multiplexed in the same slot), and three bits for up/down uplink power control (one bit for each mobile station). Power control provided by this structure allows 50 bits-per-second up/down power adjustments for twenty-millisecond TTIs. Step sizes may be set between one and two dB, for example. Uplink power control is desirable because multiple users can share a common uplink slot, and various multi-user receivers favor different power ratios among users. Power control mechanism allows the network to adjust transmitted uplink power according to the deployed multi-user algorithm, current radio conditions, and other parameters and requirements.

The downlink control information in the downlink packet header may include three bits indicating traffic channel Power Offset relative to pilot power (fraction of power used to transmit to the mobile station in weak radio conditions), three modulation and coding (MCS) bits indicating selected modulation and coding scheme, one or two ReTX bits indicating retransmission number, and a one-bit flag F indicating transmission of a new data block. The new data block flag F and the ReTX field allow the mobile station to infer part of control information. For example, modulation and coding do not change from one transmission to the other in some variants. If the mobile station decodes the control information that accompanies the second transmission, for example, it may be able to determine the MCS for the first transmission.

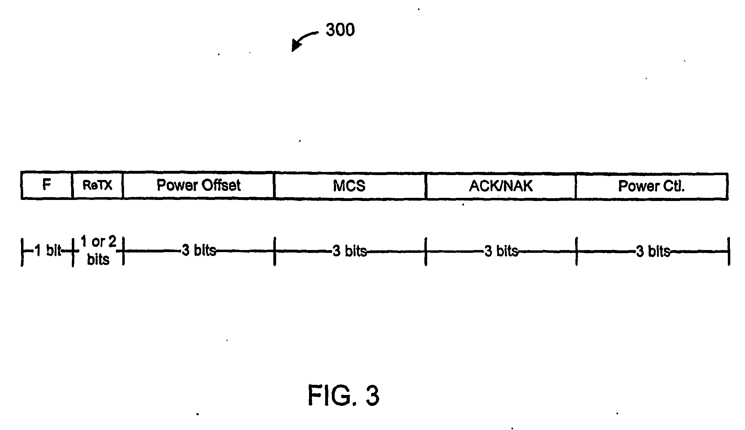

The exemplary downlink control structure described in the immediately preceding paragraphs is illustrated in Figure 3, which shows selected fields of an exemplary downlink header 300 with fourteen or fifteen bits of downlink control information, depending on the length of the ReTX field. The header may further contain cyclic redundancy check (CRC) bits and reserved bits, for example, eight CRC bits and two reserved bits, bringing the total number of bits to 24 or 25.

The encoding options for the downlink header may be as follows:

• Constraint length 9, 1/4 convolution code, resulting in 32*4/(116*4)=0.28 or 28 percent overhead. This configuration may be suitable for very low C/I ratio regions, although other regions are not necessarily excluded. In some simulations, it works well for C/I ratios as low as - 4 dB. In order to be able to compensate of the increased overhead, spectral efficiency needs to be improved by a little over 38 percent ($[^1/_{(1-0.28)}]\cong1.38$).

• Constraint length 9, 1/2 convolution code, resulting in 32*2/(116*4)=0.14 or 14 percent overhead. The C/I per coded bit may be 0 dB or above. In order to be able to compensate for the increased overhead, spectral efficiency needs to be improved by 16 percent ($[^1/_{(1-0.14)}]\cong1.16$).

In addition to the overhead shown in Figure 3 and the CRC and reserved bits, the data payload portion of the downlink frame/packet may contain MAC IDs and length fields indicating the useful payload for each mobile station. In case of superposition coded packets, data portion of the mobile station in weak radio conditions may contain all necessary header information for all other mobile stations as well. This additional overhead is typically one byte or less per mobile station, because MAC ID can be two bits, and the length field typically need not exceed six bits.

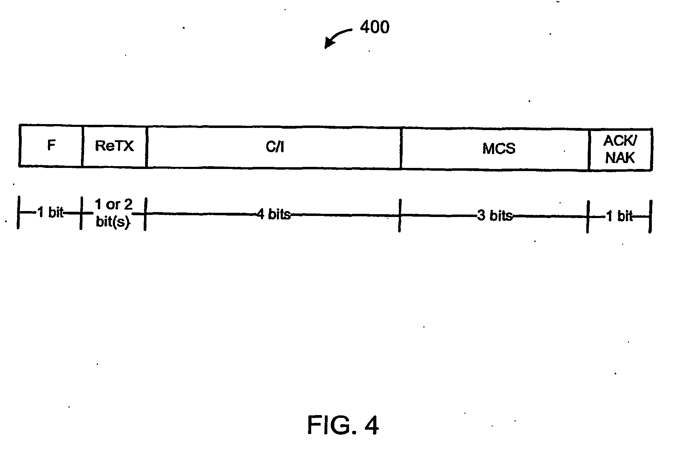

Uplink overhead may be multiplexed in a similar fashion to that of the downlink overhead. Figure 4 illustrates selected fields of an exemplary uplink header 400 that includes a four-bit C/I field with carrier-to-interference ratio information that may be used for downlink rate selection, a three-bit MCS field used to convey the selected modulation and coding scheme for the uplink, one-bit ACK/NAK field carrying positive or negative acknowledgement for downlink transmission, an ReTX field of one or two bits for conveying retransmission number, and a one-bit F flag indicating transmission of a new data block.

The total number of bits in the fields shown in Figure 4 is ten or eleven. The uplink header may additionally contain eight bits of CRC, and three reserved bits, bringing the total number of bits to twenty-one or twenty two, depending on the length of the ReTX field. The encoding options for the uplink header may be as follows:

• Constraint length 9, 1/4 convolution code, resulting in 28*4/(116*4)=0.24 or 24 percent overhead. Therefore, approximately 32 percent improvement in spectral efficiency will compensate for the increased overhead ($[^1/_{(1-0.24)}]\cong1.32$). This configuration may be suitable for use in very low C/I ratio regions, although other regions are not necessarily excluded. Consider an example where symbol level C/I is ~ -5 dB, accounting for three equal strength users sharing the same slot and one interfering user (from another cell, for example) with the same strength as the other three users. Assuming -5 dB C/I and dual receiver antenna diversity, control channel information can be decoded when required Eb/Nt (the ratio of energy-per-bit to the effective noise spectral density) for the selected code is below 4 dB, which is well within the capabilities of many convolutional codes.

• Constraint length 9, 1/2 convolution code, resulting in 28*2/(116*4)=0.12 or 12 percent overhead. In this case, in order to be able to compensate for the increased overhead, spectral efficiency needs to be improved by

$$\left(\left[\frac{1}{(1-0.12)}\right]\cong1.14\right),$$ or fourteen percent. This configuration is sufficient for most cases, because it can handle symbol level C/I of -2 dB.

The decoding of overhead information may require joint decoding, interference cancellation, or both of these techniques. Overhead information received from all users may be approximately synchronized, so that joint decoding and interference cancellation can be limited to the header portion. Any overlap with the data portion may be treated as interference. Separate decoder may jointly decode the data portion. In some variants, the training sequences for uplink channel estimation and tracking are selected to minimize cross correlation between sequences, in order to avoid joint time tracking algorithms for all users that share a common slot.

Joint detection may be performed to facilitate multiple mobile station uplink transmissions in one slot. In some cases, a successive interference cancellation (SIC) receiver may be suitable for this function. A joint multi-user receiver may also be used. Such a receiver would make the system throughput less susceptible to changes in rate and power distribution among mobile stations. The complexity of the multi-user receiver should remain manageable for joint decoding of 2, 3, or 4 users. A higher number of users is also not excluded.

Uplink rate control may be performed with Layer 3 signaling.

The BTS 120 may configure itself and the mobile stations to switch assigned slots. This may be desirable to regroup the mobile stations as radio conditions change. A mobile station may be able to perform a "soft" switch to a different slot; that is, be able to transmit and receive in two different slots, on either or both uplink and downlink. This feature is analogous to the capability of a mobile station to transmit and receive on two downlink and two uplink slots in conventional GSM-based systems. Note that due to H-ARQ operation, there maybe be up to four pending transmission in progress at any point in time (assuming that there are only two H-ARQ instances).

In order to keep the number of H-ARQ instances to a minimum of two, it may be desirable to select the uplink channel so that a mobile station has enough time to decode the received downlink packet and form an uplink header that contains ACK/NAK information. It may also be desirable to allow enough time for the BTS to decode an uplink packet and form a downlink header that contains ACK/NAK information for the uplink transmission. In some variants, for example variants with a total of eight slots in a burst, offsets of three and four slots work well for these purposes. Offsets of two slots and five or more slots may also be used in some circumstances.

Let us next address VoIP packet transmission over GSM air interfaces. The first question is whether a VoIP frame will fit in one RLC/MAC (Radio Link Control/ Medium Access Control) block. It has been argued that with the use of appropriate header compression, one RLC/MAC block coded with MCS 7, 8, or 9 can contain one VoIP frame. Moreover, while the size of a VoIP frame depends on the particular codec employed, twenty bytes are typically an acceptable payload (from the mean opinion score point of view), representing ten milliseconds of a voice stream in VoIP networks. This means that even with no RTP compression, a typical VoIP datagram may fall in the 64 to 66 byte range. With RTP compression, a typical compressed VoIP datagram may fall in the 22 to 24 byte range. (This does not include GERAN-specific headers, such as SNDCP/LLC/RLC.) Thus, a typical VoIP frame should fit in one RLC.MAC block of a GSM air interface.

A VoIP call is by its nature bidirectional, while of course being a data call. We propose exploiting the downlink/uplink symmetry for fast feedback of ARQ, link quality information, Incremental Redundancy H-ARQ, and possibly other information. In particular, a mechanism is introduced into a GERAN system (such as the system 100 of Figure 1) to provide fast uplink feedback for downlink blocks that have or have not been received, and to provide fast downlink feedback for the uplink blocks that have or have not been received. This can be done with a modification of the RLC/MAC header of the uplink and downlink frames.

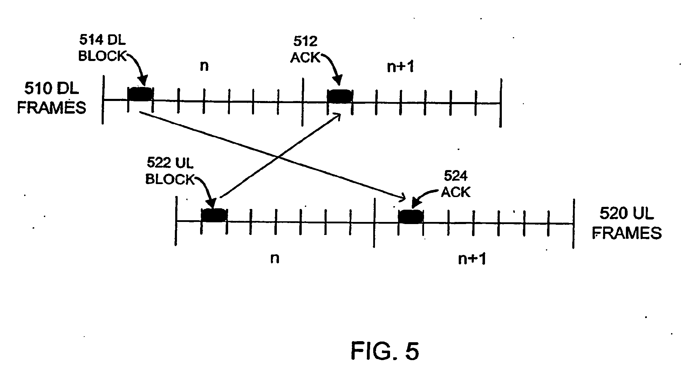

Note that such a feedback mechanism does not necessarily require the use of a bitmap. Instead, an implicit rule may be adopted to define (1) a relationship between transmission of uplink blocks and corresponding feedback in downlink blocks, and (2) transmission of downlink blocks and corresponding feedback in uplink blocks. For example, the uplink in radio block in frame "n+1" may provide feedback for the downlink block in frame "n" (whether the block was received or not); and the downlink in radio block in frame "n+1" may provide feedback for the uplink block in frame "n" (also regardless of whether the block was received or not). This scheme is illustrated in Figure 5, in which an upper part 510 depicts downlink air interface frames, and a lower part 520 depicts uplink air interface frames. As shown in this Figure, acknowledgement for an uplink block 522 of an uplink frame "n" is transmitted in a downlink block 512 of a frame "n+1." Similarly, acknowledgement for a downlink block 514 of a downlink frame "n" is transmitted in an uplink block 524 of an uplink frame "n+1." Here, uplink and downlink frames with the same sequence number, "n," for example, are the frames with the largest overlap in time.

It should be noted that the frame offset need is not necessarily be one frame as shown in Figure 5; frame offset may be two, three, four, or even a higher number of frames. Thus, acknowledgement for an uplink block in an uplink frame "n" may be transmitted in a downlink block of a frame "n+m," and acknowledgement for a downlink block of a downlink frame "n" may be transmitted in an uplink block of an uplink frame "n+p." Both "m" and "p" may be integers equal to or greater than one, they may be equal to each other or not equal to each other, and they may be predetermined or variable. For example, "m" may be equal to two, and "p" may be equal to three.

Furthermore, an acknowledgement for multiple (two or more) downlink blocks may be transmitted in each or selected uplink frames; similarly, an acknowledgement for multiple uplink blocks may be transmitted in each downlink frame or in selected downlink frames. For example, an uplink frame "n+2" may carry an acknowledgement for downlink frames "n" and "n+1"; and a downlink frame "n+2" may carry an acknowledgement for uplink frames "n" and "n+1." Once again, the acknowledgement scheme is not necessarily identical for uplink and downlink air interface frames. For example, an uplink frame "n+2" may carry an acknowledgement for downlink frames "n" and "n+1," while a downlink frame "n+2" may carry an acknowledgement for uplink frames "n-1" and "n." As another example, an uplink frame may carry acknowledgement for a different number (either more or less) of blocks than a downlink frames. Note that the acknowledgement for multiple frames may be repeated. For example, each uplink frame may carry acknowledgement for blocks in two preceding downlink frames, and each downlink frame may carry acknowledgement for blocks in two preceding uplink frames.

It should be understood that the acknowledgments and other feedback are provided automatically, *i.e*., in response to receipt of the blocks, rather than in response to polling. The acknowledgement and other feedback may be included in an RLC/MAC header of a block sent from the receiver of the block(s) being acknowledged to the source of the block(s) being acknowledged.

One aspect of the introduction of fast automatic feedback techniques described above is that they could be used to provide a faster Incremental Redundancy H-ARQ, especially if the fast feedback techniques are used in conjunction with the shorter TTI, and with RLC/MAC non-persistent mode. (Incremental Redundancy H-ARQ refers to adaptation of error correcting coding redundancy to fluctuating radio conditions.) A VoIP call over a GERAN air interface could then enjoy Incremental Redundancy gain without incurring an excessive delay budget hit.

Fast feedback techniques described above may be extended further beyond acknowledgement and Incremental Redundancy H-ARQ information. For example, the quality of the air interface link (*e.g.*, C/I ratio of the downlink) may also be updated at more frequent intervals. In some variants, a mobile station transmits to the BTS estimates of the quality of the downlink connection with every frame. In some variants, a mobile station transmits to the BTS estimates of the quality of the downlink connection whenever the mobile station transmits an acknowledgement of a downlink block. In some variants, a mobile station transmits to the BTS estimates of the quality of the downlink connection once in every two frames, three frame, four frames, or five frames.

A difficulty may arise in applying the fast feedback techniques described above to systems with discontinuous transmission, since continuous communications on both uplink and downlink are presumed. (Discontinuous transmission or "DTX" refers to not transmitting from a wireless communication device when there is no voice input to transmit.) When there is no voice traffic in a DTX system, there may be nothing onto which the fast feedback information can be piggybacked. In some variants, this difficulty is circumvented through the use of so-called "dummy packets," that is, feedback-only packets to be sent when user voice traffic is not present. Dummy packets may be sent using very low rate and low transmitted energy, in order to minimize the interference created by such packets and the energy consumed by such packets. Dummy packets may carry H-ARQ acknowledgements, link quality information, Incremental Redundancy H-ARQ information, or other feedback information.

Although steps of the various methods may have been described serially in this disclosure, some of these steps may be performed by separate elements in conjunction or in parallel, asynchronously or synchronously, in a pipelined manner, or otherwise. There is no particular requirement that the steps be performed in the same order in which this description lists them, except where explicitly so indicated, otherwise made clear from the context, or inherently required. Furthermore, not every step is necessarily required in every embodiment in accordance with the invention, while some steps that have not been specifically illustrated may be desirable in some embodiments in accordance with the invention.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, circuits, and algorithm steps described in connection with the embodiments disclosed herein may be implemented as electronic hardware, computer software, or combinations of both. To illustrate clearly this interchangeability of hardware and software, various illustrative components, blocks, modules, circuits, and steps have been described above generally in terms of their functionality. Whether such functionality is implemented as hardware, software, or combination of hardware and software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, *e.g.*, a combination of a DSP and a microprocessor, a plurality of microprocessors, one or more microprocessors in conjunction with a DSP core, or any other such configuration.

The steps of methods or algorithms described in connection with the embodiments disclosed herein may be embodied directly in hardware, in a software module executed by a processor, or in a combination of the two. A software module may reside in random access memory (RAM), flash memory, read only memory (ROM), erasable programmable read only memory (EPROM), electrically erasable programmable read only memory (EEPROM), registers, hard disk, removable disk, CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user equipment device (mobile station). Alternatively, the processor and the storage medium may reside as discrete components in a user equipment device. The processor and the storage medium may also reside in a BTS or a radio network controller.

The previous description of the disclosed embodiments is provided to enable any person skilled in the art to make or use the present invention. Various modifications to these embodiments will be readily apparent to those skilled in the art, and the generic principles defined herein may be applied to other embodiments without departing from the scope of the invention. Thus, the present invention is not intended to be limited to the embodiments shown herein, but is to be accorded the widest scope consistent with the claims.

## Claims

1. A method of providing acknowledgement for a Radio Link Control/Medium Access Control (RLC/MAC) block (514, 522) sent by a sender to a receiver over an air interface compliant with Global System for Mobile Communications (GSM) Enhanced Data rates for GSM Evolution (EDGE) Radio Access Network (GERAN) standard, the method comprising:

   receiving by the receiver through the air interface a first RLC/MAC block (514, 522) sent by the sender; and
   in response to receipt of the first RLC/MAC block by the receiver, automatically transmitting from the receiver to the sender through the air interface a first acknowledgement of the first RLC/MAC block (514, 522), the first acknowledgement comprising a positive acknowledgement (ACK) if the first block (514, 522) was successfully decoded by the receiver, the first acknowledgement comprising a negative acknowledgement if the first block (514, 522) was not successfully decoded by the receiver, wherein the step of automatically transmitting the first acknowledgement comprises including the first acknowledgement in a header of a second RLC/MAC block (512, 524), and sending through the air interface the second RLC/MAC block (512, 524) from the receiver to the sender.

2. The method of claim 1, wherein the step of automatically transmitting is performed within a predetermined time of receipt of the first RLC/MAC block by the receiver.

3. The method of claim 1, wherein the step of automatically transmitting is performed after a predetermined time interval following receipt of the first RLC/MAC block by the receiver.

4. The method of claim 2, wherein the step of automatically transmitting is performed within one transmission time interval (TTI) of receipt of the first RLC/MAC block by the receiver.

5. The method of claim 2, wherein the step of automatically transmitting is performed within two transmission time intervals (TTIs) of receipt of the first RLC/MAC block by the receiver.

6. The method of claim 2, wherein the step of automatically transmitting is performed within three transmission time intervals (TTIs) of receipt of the first RLC/MAC block by the receiver.

7. The method of claim 2, wherein the step of automatically transmitting is performed within four transmission time intervals (TTIs) of receipt of the first RLC/MAC block by the receiver.

8. The method of claim 1, further comprising:

   receiving by the receiver through the air interface a third RLC/MAC block sent by the sender; and
   in response to receipt of the third RLC/MAC block by the receiver, automatically transmitting from the receiver to the sender through the air interface a second acknowledgement of the third RLC/MAC block, the second acknowledgement being (1) a positive acknowledgement (ACK) if the third block was successfully decoded by the receiver, or (2) a negative acknowledgement if the third block was not successfully decoded by the receiver; wherein the step of automatically transmitting the second acknowledgement comprises including the second acknowledgement in the header of the second RLC/MAC block.

9. The method of claim 1, further comprising:

receiving by the receiver through the air interface one or more additional RLC/MAC blocks sent by the sender; and
in response to receipt of the one or more additional RLC/MAC blocks, including acknowledgement for each of the one or more additional RLC/MAC blocks in the header of the second RLC/MAC block.

10. The method of claim 1, wherein the receiver comprises a mobile station, and the sender comprises a base transceiver station.

11. The method of claim 1, wherein the sender comprises a mobile station, and the receiver comprises a base transceiver station.

12. The method of claim 1, wherein the first RLC/MAC block comprises a first voice over Internet Protocol (VoIP) frame.

13. The method of claim 12, wherein the second RLC/MAC block comprises a second voice over Internet Protocol (VoIP) frame.

14. The method of claim 12, wherein the air interface implements discontinuous transmission (DTX) and the second RLC/MAC block comprises a dummy feedback-only packet without a voice over Internet Protocol (VoIP) frame.

15. The method of claim 1, further comprising:

including in the header of the second RLC/MAC block an indicator of quality of the link from the sender to the receiver.

16. A mobile station (130A) of a cellular communication system (100) compliant with Global System for Mobile Communications (GSM) Enhanced Data rates for GSM Evolution (EDGE) Radio Access Network (GERAN) standard, the mobile station (130A) comprising:

first means for receiving via a GERAN air interface of the cellular communication system an RLC/MAC block (514) sent by a base transceiver station (120) of the cellular communication system (100); and
second means for automatically transmitting in response to receipt of the RLC/MAC block (514) by the mobile station (130A), from the mobile station (130A) to the base transceiver station (120) through the GERAN air interface an acknowledgement of the RLC/MAC block (514), the acknowledgement comprising a positive acknowledgement (ACK) if the block (514) was successfully decoded by the mobile station (130A), the acknowledgement comprising a negative acknowledgement if the block (514) was not successfully decoded by the mobile station (130A), wherein automatically transmitting the first acknowledgement (524) comprises including the first acknowledgement in a header of a second RLC/MAC block (524), and sending through the air interface the second RLC/MAC block (524) from the mobile station (130A) to the base transceiver station (120).

17. The mobile station of claim 16, wherein the first RLC/MAC block comprises a voice over Internet Protocol (VoIP) frame.

18. A machine-readable medium comprising instructions, the instructions, when executed by at least one processor of a mobile station (130A) of a cellular communication system (100) compliant with Global System for Mobile Communications (GSM) Enhanced Data rates for GSM Evolution (EDGE) Radio Access Network (GERAN) standard, cause the at least one processor to configure the mobile station (130A) to perform operations comprising:

receiving through the air interface of the cellular communication system a first RLC/MAC block (514) sent by a base transceiver station (120) of the cellular communication system (100); and
in response to receipt of the first RLC/MAC block (514) by the mobile station (130A), automatically transmitting from the mobile station (130A) to the base transceiver station (120) through the air interface a first acknowledgement of the first RLC/MAC block (514), the first acknowledgement comprising a positive acknowledgement (ACK) if the first block (514) was successfully decoded by the mobile station, the first acknowledgement comprising a negative acknowledgement if the first block (514) was not successfully decoded by the mobile station (130A), wherein automatically transmitting the first acknowledgement comprises including the first acknowledgement in a header of a second RLC/MAC block (524), and sending through the air interface the second RLC/MAC block (524) from the mobile station (130A) to the base transceiver station (120).

19. A base transceiver station (120) of a cellular communication system (100) compliant with Global System for Mobile Communications (GSM) Enhanced Data rates for GSM Evolution (EDGE) Radio Access Network (GERAN) standard, the base transceiver station (120) comprising:

a receiver;
a transmitter;
a memory storing program code; and
a processor coupled to the receiver, transmitter, and the memory, wherein the processor under control of the program code is configured to cause the base transceiver station to perform steps comprising:

receiving through the air interface of the cellular communication system a first RLC/MAC block (522) sent by a mobile station (130A) of the cellular communication system (100); and
in response to receipt of the first RLC/MAC block (522) by the base transceiver station (120), automatically transmitting from the base transceiver station (120) to the mobile station (130A) through the air interface a first acknowledgement of the first RLC/MAC block (522), the first acknowledgement comprising a positive acknowledgement (ACK) if the first block (522) was successfully decoded by the base transceiver station (120), the first acknowledgement comprising a negative acknowledgement if the first block (522) was not successfully decoded by the base transceiver station (120), wherein automatically transmitting the first acknowledgement comprises including the first acknowledgement in a header of a second RLC/MAC block (512), and sending through the air interface the second RLC/MAC block (512) from the base transceiver station (120) to the mobile station (130A).

20. A machine-readable medium comprising instructions, the instructions, when executed by at least one processor of a base transceiver station (120) of a cellular communication system (100) compliant with Global System for Mobile Communications (GSM) Enhanced Data rates for GSM Evolution (EDGE) Radio Access Network (GERAN) standard, cause the at least one processor to configure the base transceiver station (120) to perform operations comprising:

receiving through the air interface of the cellular communication system a first RLC/MAC block (522) sent by a mobile station (130A) of the cellular communication system (100); and
in response to receipt of the first RLC/MAC block (522) by the base transceiver station (120), automatically transmitting from the base transceiver station (120) to the mobile station (130A) through the air interface a first acknowledgement of the first RLC/MAC block (522), the first acknowledgement comprising a positive acknowledgement (ACK) if the first block (522) was successfully decoded by the base transceiver station (130A), the first acknowledgement comprising a negative acknowledgement if the first block (522) was not successfully decoded by the base transceiver station (130A), wherein automatically transmitting the first acknowledgement comprises including the first acknowledgement in a header of a second RLC/MAC block (512), and sending through the air interface the second RLC/MAC block (512) from the base transceiver station (120) to the mobile station (130A).

**Patentansprüche**

1. Ein Verfahren zum Vorsehen einer Bestätigung für einen RLC/MAC (Radio Link Control/Medium Access Control)-Block (514, 522), der durch einen Sender an einen Empfänger über eine Funkschnittstelle gemäß dem GSM (Global System for Mobile Communications) EDGE (Enhanced Data rates for GSM Evolution) Radio Access Network (GERAN)-Standard gesendet wurde, wobei das Verfahren folgende Schritte aufweist:

Empfangen, durch den Empfänger über die Funkschnittstelle, eines ersten RLC/MAC-Blocks (514, 522), der durch den Sender gesendet wurde, und
in Antwort auf das Empfangen des ersten RLC/MAC-Blocks durch den Empfänger, automatisches Senden von dem Empfänger an den Sender, über die Funkschnittstelle, einer ersten Bestätigung für den ersten RLC/MAC-Block (514, 522), wobei die erste Bestätigung eine positive Bestätigung (ACK) ist, wenn der erste Block (514, 522) erfolgreich durch den Empfänger decodiert wurde, und wobei die erste Bestätigung eine negative Bestätigung ist, wenn der erste Block (514, 522) nicht erfolgreich durch den Empfänger decodiert wurde, wobei der Schritt zum automatischen Senden der ersten Bestätigung das Einfügen der ersten Bestätigung in einen Header eines zweiten RLC/MAC-Blocks (512, 524) und das Senden, über die Funkschnittstelle, des zweiten RLC/MAC-Blocks (512, 524) von dem Empfänger an den Sender aufweist.

2. Verfahren nach Anspruch 1, wobei der Schritt zum automatischen Senden innerhalb einer vorbestimmten Zeit nach dem Empfangen des ersten RLC/MAC-Blocks durch den Empfänger durchgeführt wird.

3. Verfahren nach Anspruch 1, wobei der Schritt zum automatischen Senden nach einem vorbestimmten Zeitintervall auf das Empfangen des ersten RLC/MAC-Blocks durch den Empfänger folgend durchgeführt wird.

4. Verfahren nach Anspruch 2, wobei der Schritt zum automatischen Senden innerhalb eines Sendezeitintervalls (TTI) nach dem Empfang des ersten RLC/MAC-Blocks durch den Empfänger durchgeführt wird.

5. Verfahren nach Anspruch 2, wobei der Schritt zum automatischen Senden innerhalb von zwei Sendezeitintervallen (TTIs) nach dem Empfangen des ersten RLC/MAC-Blocks durch den Empfänger durchgeführt wird.

6. Verfahren nach Anspruch 2, wobei der Schritt zum automatischen Senden innerhalb von drei Sendezeitintervallen (TTIs) nach dem Empfangen des ersten RLC/MAC-Blocks durch den Empfänger durchgeführt wird.

7. Verfahren nach Anspruch 2, wobei der Schritt zum automatischen Senden innerhalb von vier Sendezeitintervallen (TTIs) nach dem Empfangen des ersten RLC/MAC-Blocks durch den Empfänger durchgeführt wird.

8. Verfahren nach Anspruch 1, das weiterhin aufweist:

Empfangen, durch den Empfänger über die Funkschnittstelle, eines dritten RLC/MAC-Blocks, der durch den Sender gesendet wurde, und
in Antwort auf das Empfangen des dritten RLC/MAC-Blocks durch den Empfänger, automatisches Senden von dem Empfänger an den Sender, über die Funkschnittstelle, einer zweiten Bestätigung des dritten RLC/MAC-Blocks, wobei die zweite Bestätigung (1) eine positive Bestätigung (ACK) ist, wenn der dritte Block erfolgreich durch den Empfänger decodiert wurde, oder (2) eine negative Bestätigung ist, wenn der dritte Block nicht erfolgreich durch den Empfänger decodiert wurde, wobei der Schritt zum automatischen Senden der zweiten Bestätigung das Einfügen der zweiten Bestätigung in den Header des zweiten RLC/MAC-Blocks aufweist.

9. Verfahren nach Anspruch 1, das weiterhin aufweist:

Empfangen, durch den Empfänger über die Funkschnittstelle, eines oder mehrerer weiterer RLC/MAC-Blöcke, die durch den Sender gesendet wurden, und
in Antwort auf das Empfangen des einen oder der mehreren weiteren RLC/MAC-Blöcke, das Einfügen einer Bestätigung für jeden der einen oder mehreren weiteren RLC/MAC-Blöcke in den Header des zweiten RLC/MAC-Blocks.

10. Verfahren nach Anspruch 1, wobei der Empfänger eine Mobilstation ist und wobei der Sender eine Basissendeempfängerstation ist.

11. Verfahren nach Anspruch 1, wobei der Sender eine Mobilstation ist und der Empfänger eine Basissendeempfängerstation ist.

12. Verfahren nach Anspruch 1, wobei der erste RLC/MAC-Block einen ersten VoIP (Voice over Internet Protocol)-Rahmen aufweist.

13. Verfahren nach Anspruch 12, wobei der zweite RLC/MAC-Block einen zweiten VoIP (Voice over Internet Protocol)-Rahmen aufweist.

14. Verfahren nach Anspruch 12, wobei die Funkschnittstelle ein diskontinuierliches Senden (DTX) implementiert und der zweite RLC/MAC-Block ein Paket mit nur einem Dummy-Feedback und keinen VoIP (Voice over Internet Protocol)-Rahmen aufweist.

15. Verfahren nach Anspruch 1, das weiterhin aufweist:

Einfügen in den Header des zweiten RLC/MAC-Blocks einer Angabe zu der Qualität der Verbindung von dem Sender zu dem Empfänger.

16. Eine Mobilstation (130A) eines zellularen Kommunikationssystems (100) gemäß dem GSM (Global System for Mobile Communications) EDGE (Enhanced Data rates for GSM Evolution) Radio Access Network (GERAN)-Standard, wobei die Mobilstation (130A) aufweist:

erste Mittel zum Empfangen, über eine GERAN-Funkschnittstelle des zellularen Kommunikationssystems, eines RLC/MAC-Blocks (514), der durch eine Basissendeempfängerstation (120) des zellularen Kommunikationssystems (100) gesendet wurde, und
zweite Mittel zum automatischen Senden in Antwort auf das Empfangen des RLC/MAC-Blocks (514) durch die Mobilstation (130A), von der Mobilstation (130A) an die Basissendeempfängerstation (120) über die GERAN-Funkschnittstelle, einer Bestätigung des RLC/MAC-Blocks (514), wobei die Bestätigung eine positive Bestätigung (ACK) ist, wenn der Block (514) erfolgreich durch die Mobilstation (130A) decodiert wurde, und wobei die Bestätigung eine negative Bestätigung ist, wenn der Block (514) nicht erfolgreich durch die Mobilstation (130A) decodiert wurde, wobei das automatische Senden der ersten Bestätigung (524) das Einfügen der ersten Bestätigung in einen Header eines zweiten RLC/MAC-Blocks (524) und das Senden, über die Funkschnittstelle, des zweiten RLC/MAC-Blocks (524) von der Mobilstation (130A) an die Basissendeempfängerstation (120) aufweist.

17. Mobilstation nach Anspruch 16, wobei der erste RLC/MAC-Block einen VoIP (Voice over Internet Protocol)-Rahmen aufweist.

18. Ein maschinenlesbares Medium, das Befehle aufweist, wobei die Befehle bei einer Ausführung durch wenigstens einen Prozessor einer Mobilstation (130A) eines zellularen Kommunikationssystems (100) gemäß dem GSM (Global System for Mobile Communications) EDGE (Enhanced Data rates for GSM Evolution) Radio Access Network (GERAN)-Standard veranlassen, dass der wenigstens eine Prozessor die Mobilstation (130A) für das Durchführen der folgenden Operationen konfiguriert:

Empfangen, über die Funkschnittstelle des zellularen Kommunikationssystems, eines ersten RLC/MAC-Blocks (514), der durch eine Basissendeempfängerstation (120) des zellularen Kommunikationssystems (100) gesendet wurde, und
in Antwort auf das Empfangen des ersten RLC/MAC-Blocks (514) durch die Mobilstation (130A), automatisches Senden von der Mobilstation (130A) an die Basissendeempfängerstation (120) über die Funkschnittstelle einer ersten Bestätigung für den ersten RLC/MAC-Block (514), wobei die erste Bestätigung eine positive Bestätigung (ACK) ist, wenn der erste Block (514) erfolgreich durch die Mobilstation decodiert wurde, und wobei die erste Bestätigung eine negative Bestätigung ist, wenn der erste Block (514) nicht erfolgreich durch die Mobilstation decodiert wurde, wobei das automatische Senden der ersten Bestätigung das Einfügen der ersten Bestätigung in einen Header eines zweiten RLC/MAC-Blocks (524) und das Senden, über die Funkschnittstelle, des zweiten RLC/MAC-Blocks (524) von der Mobilstation (130A) an die Basissendeempfängerstation (120) aufweist.

19. Eine Basissendeempfängerstation (120) eines zellularen Kommunikationssystems (100) gemäß dem GSM (Global System for Mobile Communications) EDGE (Enhanced Data rates for GSM Evolution) Radio Access Network (GERAN)-Standard, wobei die Basissendeempfängerstation (120) aufweist:

einen Empfänger,
einen Sender,
einen Speicher zum Speichern eines Programmcodes, und
einen Prozessor, der mit dem Empfänger, dem Sender und dem Speicher gekoppelt ist, wobei der Prozessor unter der Steuerung des Programmcodes konfiguriert ist, um die Basissendeempfängerstation zum Durchführen der folgenden Schritte zu veranlassen:

Empfangen, über die Funkschnittstelle des zellularen Kommunikationssystems, eines ersten RLC/MAC-Blocks (522), der durch eine Mobilstation (130A) des zellularen Kommunikationssystems (100) gesendet wurde, und
in Antwort auf das Empfangen des ersten RLC/MAC-Blocks (522) durch die Basissendeempfängerstation (120), automatisches Senden von der Basissendeempfängerstation (120) an die Mobilstation (130A), über die Funkschnittstelle, einer ersten Bestätigung für den ersten RLC/MAC-Block (522), wobei die erste Bestätigung eine positive Bestätigung (ACK) ist, wenn der erste Block (522) erfolgreich durch die Basissendeempfängerstation (120) decodiert wurde, und wobei die erste Bestätigung eine negative Bestätigung ist, wenn der erste Block (522) nicht erfolgreich durch die Basissendeempfängerstation (120) decodiert wurde, wobei das automatische Senden der ersten Bestätigung das Einfügen der ersten Bestätigung in einen Header eines zweiten RLC/MAC-Blocks (512) und das Senden, über die Funkschnittstelle, des zweiten RLC/MAC-Blocks (512) von der Basissendeempfängerstation (120) an die Mobilstation (130A) aufweist.

20. Ein maschinenlesbares Medium, das Befehle aufweist, die bei einer Ausführung durch wenigstens einen Prozessor einer Basissendeempfängerstation (120) eines zellularen Kommunikationssystems (100) gemäß dem GSM (Global System for Mobile Communications) EDGE (Enhanced Data rates for GSM Evolution) Radio Access Network (GERAN)-Standard veranlassen, dass der wenigstens eine Prozessor die Basissendeempfängerstation (120) für das Durchführen der folgenden Operationen konfiguriert:

Empfangen über die Funkschnittstelle des zellularen Kommunikationssystems eines ersten RLC/MAC-Blocks (522), der durch eine Mobilstation (130A) des zellularen Kommunikationssystems (100) gesendet wurde, und in Antwort auf das Empfangen des ersten RLC/MAC-Blocks (522) durch die Basissendeempfängerstation (120), automatisches Senden von der Basissendeempfängerstation (120) an die Mobilstation (130A) über die Funkschnittstelle einer ersten Bestätigung für den ersten RLC/MAC-Block (522), wobei die erste Bestätigung eine positive Bestätigung (ACK) ist, wenn der erste Block (522) erfolgreich durch die Basissendeempfängerstation (120) decodiert wurde, und wobei die erste Bestätigung eine negative Bestätigung ist, wenn der erste Block (522) nicht erfolgreich durch die Basissendeempfängerstation (120) decodiert wurde, wobei das automatische Senden der ersten Bestätigung das Einfügen der ersten Bestätigung in einen Header eines zweiten RLC/MAC-Blocks (512) und das Senden, über die Funkschnittstelle, des zweiten RLC/MAC-Blocks (512) von der Basissendeempfängerstation (120) an die Mobilstation (130A) aufweist.

## Revendications

1. Procédé de fourniture d'accusé de réception pour un bloc de commande de liaison radio/commande d'accès au support (RLC/MAC) (514, 522) envoyé par un expéditeur à un récepteur sur une interface radio conforme à la norme de réseau d'accès radio (GERAN) à débits de données améliorés pour évolution GSM (EDGE) du système mondial de communication avec les mobiles (GSM), le procédé comprenant :

la réception par le récepteur, par l'intermédiaire de l'interface radio, d'un premier bloc RLC/MAC (514, 522) envoyé par l'expéditeur ; et en réponse à la réception du premier bloc RLC/MAC par le récepteur, l'envoi automatique, du récepteur à l'expéditeur par l'intermédiaire de l'interface radio, d'un premier accusé de réception du premier bloc RLC/MAC (514, 522), le premier accusé de réception comprenant un accusé de réception positif (ACK) si le premier bloc (514, 522) a été décodé avec succès par le récepteur, le premier accusé de réception comprenant un accusé de réception négatif si le premier bloc (514, 522) n'a pas été décodé avec succès par le récepteur, dans lequel l'étape d'envoi automatique du premier accusé de réception comprend l'inclusion du premier accusé de réception dans un en-tête d'un deuxième bloc RLC/MAC (512, 524) et l'envoi, par l'intermédiaire de l'interface radio, du deuxième bloc RLC/MAC (512, 524) du récepteur à l'expéditeur.

2. Procédé selon la revendication 1, dans lequel l'étape d'envoi automatique est effectuée moins d'un temps prédéterminé après la réception du premier bloc RLC/MAC par le récepteur.

3. Procédé selon la revendication 1, dans lequel l'étape d'envoi automatique est effectuée après un intervalle de temps prédéterminé suivant la réception du premier bloc RLC/MAC par le récepteur.

4. Procédé selon la revendication 2, dans lequel l'étape d'envoi automatique est effectuée moins d'un intervalle de temps de transmission (TTI) après la réception du premier bloc RLC/MAC par le récepteur.

5. Procédé selon la revendication 2, dans lequel l'étape d'envoi automatique est effectuée moins de deux intervalles de temps de transmission (TTI) après la réception du premier bloc RLC/MAC par le récepteur.

6. Procédé selon la revendication 2, dans lequel l'étape d'envoi automatique est effectuée moins de trois intervalles de temps de transmission (TTI) après la réception du premier bloc RLC/MAC par le récepteur.

7. Procédé selon la revendication 2, dans lequel l'étape d'envoi automatique est effectuée moins de quatre intervalles de temps de transmission (TTI) après la réception du premier bloc RLC/MAC par le récepteur.

8. Procédé selon la revendication 1, comprenant en outre :

la réception par le récepteur, par l'intermédiaire de l'interface radio, d'un troisième bloc RLC/MAC envoyé par l'expéditeur ; et en réponse à la réception du troisième bloc RLC/MAC par le récepteur, l'envoi automatique, du récepteur à l'expéditeur par l'intermédiaire de l'interface radio, d'un deuxième accusé de réception du troisième bloc RLC/MAC, le deuxième accusé de réception étant (1) un accusé de réception positif (ACK) si le troisième bloc a été décodé avec succès par le récepteur, ou (2) un accusé de réception négatif si le troisième bloc n'a pas été décodé avec succès par le récepteur, dans lequel l'étape d'envoi automatique du deuxième accusé de réception comprend l'inclusion du deuxième accusé de réception dans l'en-tête du deuxième bloc RLC/MAC.

9. Procédé selon la revendication 1, comprenant en outre :

la réception par le récepteur, par l'intermédiaire de l'interface radio, d'un ou plusieurs blocs RLC/MAC supplémentaires envoyés par l'expéditeur ; et
en réponse à la réception du ou des blocs RLC/MAC supplémentaires, l'inclusion d'un accusé de réception pour chacun du ou des blocs RLC/MAC supplémentaires dans l'en-tête du deuxième bloc RLC/MAC.

10. Procédé selon la revendication 1, dans lequel le récepteur comprend une station mobile et l'expéditeur comprend une station d'émission-réception de base.

11. Procédé selon la revendication 1, dans lequel l'expéditeur comprend une station mobile et le récepteur comprend une station d'émission-réception de base.

12. Procédé selon la revendication 1, dans lequel le premier bloc RLC/MAC comprend une première trame de voix sur protocole Internet (VoIP).

13. Procédé selon la revendication 12, dans lequel le deuxième bloc RLC/MAC comprend une deuxième trame de voix sur protocole Internet (VoIP).

14. Procédé selon la revendication 12, dans lequel l'interface radio met en oeuvre une émission discontinue (DTX) et le deuxième bloc RLC/MAC comprend un paquet de rétroaction factice seulement sans trame de voix sur protocole Internet (VoIP).

15. Procédé selon la revendication 1, comprenant en outre :

l'inclusion, dans l'en-tête du deuxième bloc RLC/MAC, d'un indicateur de qualité de la liaison de l'expéditeur au récepteur.

16. Station mobile (130A) d'un système de communication cellulaire (100) conforme à la norme de réseau d'accès radio (GERAN) à débits de données améliorés pour évolution GSM (EDGE) du système mondial de communication avec les mobiles (GSM), la station mobile (130A) comprenant :

un premier moyen pour recevoir, par l'intermédiaire d'une interface radio GERAN du système de communication cellulaire, un bloc RLC/MAC (514) envoyé par une station d'émission-réception de base (120) du système de communication cellulaire (100) ; et
un deuxième moyen pour envoyer automatiquement, en réponse à la réception du bloc RLC/MAC (514) par la station mobile (130A), de la station mobile (130A) à la station d'émission-réception de base (120) par l'intermédiaire de l'interface radio GERAN, un accusé de réception du bloc RLC/MAC (514), l'accusé de réception comprenant un accusé de réception positif (ACK) si le bloc (514) a été décodé avec succès par la station mobile (130A), l'accusé de réception comprenant un accusé de réception négatif si le bloc (514) n'a pas été décodé avec succès par la station mobile (130A),
dans laquelle l'envoi automatique du premier accusé de réception (524) comprend l'inclusion du premier accusé de réception dans un en-tête d'un deuxième bloc RLC/MAC (524) et l'envoi, par l'intermédiaire de l'interface radio, du deuxième bloc RLC/MAC (524) de la station mobile (130A) à la station d'émission-réception de base (120).

17. Station mobile selon la revendication 16, dans laquelle le premier bloc RLC/MAC comprend une trame de voix sur protocole Internet (VoIP).

18. Support lisible par machine comprenant des instructions, les instructions, lorsqu'elles sont exécutées par au moins un processeur d'une station mobile (130A) d'un système de communication cellulaire (100) conforme à la norme de réseau d'accès radio (GERAN) à débits de données améliorés pour évolution GSM (EDGE) du système mondial de communication avec les mobiles (GSM), amenant l'au moins un processeur à configurer la station mobile (130A) pour effectuer des opérations comprenant :

la réception, par l'intermédiaire de l'interface radio du système de communication cellulaire, d'un premier bloc RLC/MAC (514) envoyé par une station d'émission-réception de base (120) du système de communication cellulaire (100) ; et
en réponse à la réception du premier bloc RLC/MAC (514) par la station mobile (130A), l'envoi automatique, de la station mobile (130A) à la station d'émission-réception de base (120) par l'intermédiaire de l'interface radio, d'un premier accusé de réception du premier bloc RLC/MAC (514), le premier accusé de réception comprenant un accusé de réception positif (ACK) si le premier bloc (514) a été décodé avec succès par la station mobile, le premier accusé de réception comprenant un accusé de réception négatif si le premier bloc (514) n'a pas été décodé avec succès par la station mobile (130A),

dans lequel l'envoi automatique du premier accusé de réception comprend l'inclusion du premier accusé de réception dans un en-tête d'un deuxième bloc RLC/MAC (524) et l'envoi, par l'intermédiaire de l'interface radio, du deuxième bloc RLC/MAC (524) de la station mobile (130A) à la station d'émission-réception de base (120).

19. Station d'émission-réception de base (120) d'un système de communication cellulaire (100) conforme à la norme de réseau d'accès radio (GERAN) à débits de données améliorés pour évolution GSM (EDGE) du système mondial de communication avec les mobiles (GSM), la station d'émission-réception de base (120) comprenant :

un récepteur ;
un émetteur ;
une mémoire stockant un code de programme ; et
un processeur couplé au récepteur, à l'émetteur et à la mémoire, le processeur sous la commande du code de programme étant configuré pour amener la station d'émission-réception de base à effectuer des étapes comprenant :

la réception, par l'intermédiaire de l'interface radio du système de communication cellulaire, d'un premier bloc RLC/MAC (522) envoyé par une station mobile (130A) du système de communication cellulaire (100) ; et
en réponse à la réception du premier bloc RLC/MAC (522) par la station d'émission-réception de base (120), l'envoi automatique, de la station d'émission-réception de base (120) à la station mobile (130A) par l'intermédiaire de l'interface radio, d'un premier accusé de réception du premier bloc RLC/MAC (522), le premier accusé de réception comprenant un accusé de réception positif (ACK) si le premier bloc (522) a été décodé avec succès par la station d'émission-réception de base (120), le premier accusé de réception comprenant un accusé de réception négatif si le premier bloc (522) n'a pas été décodé avec succès par la station d'émission-réception de base (120),
dans laquelle l'envoi automatique du premier accusé de réception comprend l'inclusion du premier accusé de réception dans un en-tête d'un deuxième bloc RLC/MAC (512) et l'envoi, par l'intermédiaire de l'interface radio, du deuxième bloc RLC/MAC (512) de la station d'émission-réception de base (120) à la station mobile (130A).

20. Support lisible par machine comprenant des instructions, les instructions, lorsqu'elles sont exécutées par au moins un processeur d'une station d'émission-réception de base (120) d'un système de communication cellulaire (100) conforme à la norme de réseau d'accès radio (GERAN) à débits de données améliorés pour évolution GSM (EDGE) du système mondial de communication avec les mobiles (GSM), amenant l'au moins un processeur à configurer la station d'émission-réception de base (120) pour effectuer des opérations comprenant :

la réception, par l'intermédiaire de l'interface radio du système de communication cellulaire, d'un premier bloc RLC/MAC (522) envoyé par une station mobile (130A) du système de communication cellulaire (100) ; et
en réponse à la réception du premier bloc RLC/MAC (522) par la station d'émission-réception de base (120), l'envoi automatique, de la station d'émission-réception de base (120) à la station mobile (130A) par l'intermédiaire de l'interface radio, d'un premier accusé de réception du premier bloc RLC/MAC (522), le premier accusé de réception comprenant un accusé de réception positif (ACK) si le premier bloc (522) a été décodé avec succès par la station d'émission-réception de base (120), le premier accusé de réception comprenant un accusé de réception négatif si le premier bloc (522) n'a pas été décodé avec succès par la station d'émission-réception de base (120),
dans lequel l'envoi automatique du premier accusé de réception comprend l'inclusion du premier accusé de réception dans un en-tête d'un deuxième bloc RLC/MAC (512) et l'envoi, par l'intermédiaire de l'interface radio, du deuxième bloc RLC/MAC (512) de la station d'émission-réception de base (120) à la station mobile (130A).

FIG. 1

FIG. 2

EP 1 936 828 B1

_300_

| F | ReTX | Power Offset | MCS | ACK/NAK | Power Ctl. |
|---|------|--------------|-----|---------|------------|

|—1 bit—|—1 or 2 bits—|———3 bits———|———3 bits———|———3 bits———|———3 bits———|

FIG. 3

400

| F | ReTX | C/I | MCS | ACK/ NAK |
|---|------|-----|-----|----------|

| 1 bit | 1 or 2 bit(s) | 4 bits | 3 bits | 1 bit |

# FIG. 4

**FIG. 5**

**EP 1 936 828 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 60701967 B

- US 60758075 B

**Non-patent literature cited in the description**

- **BALL C F et al.** *VEHICULAR TECHNOLOGY CONFERENCE,* 26 September 2004, ISBN 0-7803-8521-7, 4521-4527